Europäisches Patentamt

**European Patent Office**

Office européen des brevets

(11) Numéro de publication: **0 327 453**
**A1**

## (12) DEMANDE DE BREVET EUROPEEN

(21) Numéro de dépôt: **89400280.7**

(22) Date de dépôt: **01.02.89**

(51) Int. Cl.⁴: **A 23 C 3/037**
**A 23 C 19/05**

(30) Priorité: **02.02.88 FR 8801174**

(43) Date de publication de la demande:
**09.08.89 Bulletin 89/32**

(84) Etats contractants désignés:
**AT BE CH DE ES FR GB GR IT LI LU NL SE**

(71) Demandeur: **SOCIETE DE DEVELOPPEMENTS ET D'INNOVATIONS DES MARCHES AGRICOLES ET ALIMENTAIRES - SODIMA- UNION DE COOPERATIVES AGRICOLES**
**170 bis, Boulevard du Montparnasse**
**F-75014 Paris (FR)**

(72) Inventeur: **Falconnier, Patrick**
**19, rue du Général Galliéni**
**F-78220 Viroflay (FR)**

**Loones, Alain**
**33, rue des Perroquets**
**F-94350 Villiers sur Marne (FR)**

(74) Mandataire: **Ahner, Francis et al**
**CABINET REGIMBEAU 26, avenue Kléber**
**F-75116 Paris (FR)**

(54) Procédé de traitement du lait pour la fabrication de fromages affinés.

(57) L'invention concerne un procédé et une installation de traitement du lait pour la fabrication de fromages affinés.

Selon l'invention, on soumet le lait à un préchauffage ne dépassant pas 50°C ; on injecte directement dans le lait préchauffé de la vapeur d'eau à haute pression (entre 7 000 et 15 000 HPa) et haute température (entre 170 et 190°C), pour un traitement de durée inférieure à une seconde et a température comprise entre 80°C et 160°C ; on soumet le mélange lait-eau à une détente pour éliminer l'eau sous forme de vapeur, et récupérer le lait ainsi traité à une température voisine de la température de préchauffage ; on utilise ensuite ce lait pour fabriquer des fromages dans un processus connu adapté au type de fromage concerné.

Application à la fabrication de fromages affinés à pâte molle ou à pâte pressée (cuite ou non).

Bundesdruckerei Berlin

EP 0 327 453 A1

**Description**

## PROCEDE DE TRAITEMENT DU LAIT POUR LA FABRICATION DE FROMAGES AFFINES

La présente invention concerne le traitement du lait pour la fabrication de fromages affinés, qu'il s'agisse de fromages à pâte pressée, cuite ou non, ou de fromages à pâte molle.

Le problème principal qui se pose actuellement dans ce domaine est celui de parvenir à détruire le plus possible de bactéries et de spores contenues dans le lait cru, tout en préservant les qualités physico-chimiques du lait, c'est-à-dire en évitant d'altérer la bonne aptitude à son utilisation en fromagerie dénommée aussi "fromageabilité".

D'une façon générale, on utilise pour les laits de fromagerie des traitements thermiques dont les conditions varient selon les applications, mais en se situant en général dans la gamme 65 à 75°C et avec un temps de traitement qui est de l'ordre de 30 secondes : de telles techniques sont par exemple décrites dans le brevet allemand N° 22 32 217.

Il existe naturellement d'autres types de traitements thermiques pour le lait, mais seulement pour effectuer une stérilisation du lait en vue de la conservation de celui-ci (on pourra par exemple se référer au brevet français N° 2 536 520).

Les deux types de traitements ci-dessus font l'objet de recherches poussées, mais dans des directions différentes, car le problème de la fromageabilité du lait ne se pose pas du tout dans les mêmes termes que le problème de la stérilisation du lait de consommation en vue de sa conservation, notamment au regard de l'aptitude du lait à la coagulation par la présure, de sa richesse en caséine, de sa charge microbienne et de la nature de sa microflore, et aussi de son aptitude au développement des bactéries lactiques, ce qui est particulièrement important pour la fabrication de fromages affinés. Lorsqu'il s'agit de la stérilisation du lait pour sa conservation, le problème est centré avant tout sur la destruction des bactéries pathogènes, sans se soucier des paramètres précités à titre d'exemple qui sont propres à la fromageabilité du lait.

Les traitements d'assainissement connus appliqués au lait dans le cadre de son utilisation en fromagerie diffèrent sensiblement selon qu'il s'agit de la fabrication de fromages affinés à pâte pressée, cuite ou non, ou de fromages affinés à pâte molle.

Rappelons que les fromages à pâte pressée sont des fromages à caillage rapide de type "présure". Le caillé est dans ce cas découpé, pressé afin de renforcer l'égouttage, puis éventuellement broyé. Une cuisson est éventuellement appliquée au caillé pour certains fromages, dits à pâte cuite.

On sait que certaines bactéries sporulées du genre Clostridium, comme le Clostridium tyrobutyricum, sont responsables de graves incidents en fromagerie. Dès 100 à 500 spores par litre de lait, des défauts de goût peuvent être observés, de même qu'un gonflement tardif du fromage en cave d'affinage, provoquant un défaut d'aspect. Ce gonflement résulte de la fermentation du lactate de calcium, avec production d'acides butyrique et acétique, et de gaz (hydrogène et gaz carbonique). Une évolution poussée de ce défaut conduit à des zones localisées de putréfaction.

Il est courant de détecter dans les laits collectés par les fromageries des teneurs en formes sporulées comprises entre 8 et 10 000 par litre avec des pointes à plus de 20 000.

A l'heure actuelle plusieurs techniques sont proposées pour assainir le lait, mais elles sont toutes limitées.

Il convient tout d'abord de citer la bactofugation, qui s'apparente essentiellement à une centrifugation.

Le principe de cette technique repose sur le fait que les micro-organismes ayant une densité légèrement supérieure à celle du lait sont susceptibles de sédimenter sous l'effet d'une force centrifuge, et peuvent être ainsi séparés du lait qui les contient. En pratique, cette opération est réalisée en continu dans des centrifugeuses à vitesse de rotation très élevée, puisque la force centrifuge à laquelle sont soumises les bactéries est de l'ordre de 7 à 9 000 g au bord des assiettes.

Le volume de la suspension concentrée (ou bactofugat) contenant les bactéries qui est ainsi éliminé peut atteindre 4 % du volume de lait traité.

Les températures courantes de bactofugation vont de 55 à 60°C.

On observe couramment dans les équipements modernes des pourcentages d'élimination des spores de 92 à 95 %. Cette efficacité est limitée par la température de fonctionnement qui doit nécessairement rester basse, et par le fait que des agglutinines naturelles du lait fixent les spores de Clostridium tyrobutyricum aux globules gras, et contribuent ainsi à leur maintien en solution.

Par bactofugation, les défauts de qualité sont parfois éliminés, et le plus souvent réduits de manière satisfaisante, si le lait de départ n'est pas trop contaminé.

Cependant, la bactofugation présente plusieurs inconvénients.

Le premier de ces inconvénients réside dans la nécessité d'employer un matériel fort coûteux (centrifugeuses spéciales). Ensuite le procédé reste lourd : on élimine du milieu en même temps que les bactéries (ce qui diminue nécessairement le rendement), on réutilise ensuite le concentrat, et on le stérilise thermiquement, et on doit en outre procéder à une réinjection en aval pour limiter la perte.

Par ailleurs, dans le cas où le lait est plus contaminé (plus de 3 000 spores par litre), la bactofugation appliquée seule ne suffit pas, et on doit compléter par un traitement thermique et/ou une injection de lysozyme (voir ci-après).

Une autre technique connue consiste à procéder à une injection de lysozyme.

L'emploi de cette méthode n'est cependant autorisé que pour les fromages qui n'ont pas d'appellation d'origine, ce qui limite de facto son domaine d'application.

Rappelons que le lysozyme est une enzyme naturelle présente dans de nombreuses sécrétions animales, mais le lait de vache en contient en fait très peu environ 130 µg/litre). Cette enzyme hydrolyse un composé pariétal de la plupart des bactéries présentes en quantité importante chez les bactéries du type dénommé Gram +. Son action se traduit par la lyse des cellules bactériennes en culture, et la conséquence en est l'inhibition de la croissance avec la mort des cellules, bien qu'il semble selon certains spécialistes que l'action lytique du lysozyme ne soit pas seule en cause dans ce phénomène. Cependant, toutes les espèces (ou souches) bactériennes ne présentent pas la même sensibilité au lysozyme, et même chez les bactéries du type Gram + certaines sont complètement résistantes à l'action de cette enzyme.

Le lysozyme actuellement commercialisé est extrait de blanc d'oeuf de poule. L'enzyme n'a pas d'effet sur les spores de Clostridium tyrobutyricum même germées, mais l'inhibition de la croissance à partir de spores ou de cellules végétatives commence à se manifester à partir de 400 à 500 unités par ml (soit 20 à 25 µg de lysozyme à 20 000 unités par mg) et ne devient totale qu'au-delà de 1 000 à 2 000 unités par ml suivant les souches et l'importance de l'inoculum. En fait, il semble qu'aux concentrations intermédiaires, la croissance soit seulement plus ou moins retardée suivant la dose de lysozyme, mais que cette croissance se produit ensuite à peu près à la même vitesse (ceci est dû au fait qu'une fraction de la population de cellules de Clostridium tyrobutyricum résiste à l'enzyme utilisée).

Les inconvénients de cette technique sont qu'elle est d'abord relativement coûteuse (actuellement 1 à 2 centimes par litre, à raison de 15 mg par litre), et ensuite que son efficacité reste limitée (notamment au regard des spores de Clostridium tyrobutyricum).

Finalement, le traitement thermique du lait utilisé pour les pâtes pressées, caractérisé par une température ne dépassant pas 75°C et pendant environ 15 à 30 secondes, est tout à fait voisin d'une pasteurisation. Ensuite, en fonction de la contamination du lait, on effectue une bactofugation et/ou un ajout de lysozyme (les deux si le lait est très contaminé). Le résultat finalement atteint au niveau de la destruction des bactéries est de l'ordre de 200 spores par litre de lait traité.

En conclusion, ces différents traitements appliqués couramment permettent de réduire le nombre total de micro-organismes du lait et les bactéries pathogènes non-sporulées, mais sont chers et d'efficacité insuffisante.

Rappelons que les fromages à pâte molle sont des petits fromages à affinage rapide (quelques semaines), de conservation limitée et d'extrait sec approchant 40/45 %. Le caillage à tendance lactique est plutôt lent. Les présentations sont très variées selon les catégories (égouttage, croûte fleurie, lavée, etc...).

Le problème actuellement le plus sensible résulte de ce que des bactéries pathogènes du genre Listeria ont été trouvées dans le lait. Ce genre ne comprend à l'heure actuelle qu'une seule espèce, dénommée Listeria monocytogenes.

Cette bactérie provoque des symptômes méningés graves chez l'homme, avec délires et fièvre. Il existe aussi une forme septicémique qui provoque une forte fièvre, compliquée de broncho-pneumonie ou de méningite purulente. Des accidents récents ont montré que la listeriose pouvait aller jusqu'à provoquer la mort des malades atteints.

Le traitement thermique constitue la seule parade contre les risques de listeriose.

Il convient de noter que, contrairement aux fromages à pâte pressée, il n'est pas nécessaire pour les fromages à pâte molle de procéder à une bactofugation et/ou à un ajout de lisozyme, car les spores de Clostridium ne sont pas gênantes dans ce cas : en effet, le caillé est plus acide, de sorte que l'on dispose d'une protection naturelle du fromage contre le développement des micro-organismes. De ce fait, l'intérêt essentiel du traitement thermique pour ce type de fromages est d'éliminer les bactéries pathogènes (Listeria en particulier).

Habituellement, les barèmes de traitements thermiques appliqués en fromagerie sont de l'ordre de 70 à 75°C, avec un temps allant de 15 a 30 secondes. Il n'est cependant pas encore prouvé que toutes les formes de Listeria soient éliminées avec certitude avec ce type de traitement : en particulier, certaines formes de Listeria semblent plus résistantes que d'autres à la chaleur. D'autre part, d'autres germes bactériens pathogènes sont étudiés et pourraient être résistants (Yersinia).

En conclusion, les traitements thermiques classiques appliqués dans la fromagerie pour la fabrication des fromages à pâte molle, sont actuellement estimés insuffisamment fiables au regard de certaines bactéries pathogènes spécialement résistantes à la température.

Pour perfectionner les techniques connues qui viennent d'être rappelées, on pourrait être tenté de prévoir des traitements thermiques à des températures plus poussées, c'est-à-dire au-delà de 70°C. En effet, les spécialistes du domaine de la fromagerie savent bien que les traitements thermiques ont une action favorable sur le rendement de fabrication, cette action bénéfique étant principalement due à la dénaturation des protéines du sérum pour des températures dépassant 70°C, car on insolubilise en fait certaines protéines du serum.

Pour les spécialistes du domaine de la fromagerie, cette dénaturation recouvre en effet plusieurs formes :
- formation d'agrégats par polymérisation d'une protéine, par exemple la β-lactoglobuline qui est une protéine sérique ;
- formation d'agrégats entre protéines du sérum, par exemple les α et β -lactoglobulines, également protéines sériques ;
- interaction entre les différentes protéines du sérum et les caséines, par liaisons hydrophobes, et surtout par l'intermédiaire des résidus thiols (le complexe α-lactaglobuline-caséine k a notamment fait l'objet d'études particulières, ainsi que l'influence de l'α-lactalbumine dans la formation de ce complexe).

Or, ces différents agrégats et les complexes formés par la chaleur co-précipitent avec la caséine, ce qui est intéressant pour le rendement de fabrication.

Cependant, les spécialistes connaissent aussi les inconvénients d'un traitement plus sévère, c'est-à-dire avec des températures dépassant 100°C et/ou avec des durées plus longues.

Le premier inconvénient réside dans le risque d'une interaction des protéines solubles et des acides aminés libres avec le lactose (réaction de Maillard), ce qui peut entraîner une coloration du lait inacceptable.

Un autre inconvénient réside dans l'action négative du chauffage qui arrive à insolubiliser le calcium et diminuer la cohésion du réseau : à l'extrême, on ne peut plus fabriquer de fromage.

Il convient en effet de rappeler à ce titre que les données sur la modification de la teneur du lait en calcium soluble sont variables en fonction de la technique de dosage et de la méthode de chauffage. Ainsi, dans des conditions de chauffage non précisées, 30 min. ont peu d'effet à 66°C, mais provoquent une diminution de 10 % à 82°C. Avec une montée en température de 1°C par minute, puis une descente de température de 5°C par minute, il y a réduction de 30 % si la température maximale du traitement est 60°C, 40 % si elle est de 70°C. Pour des chauffages d'environ une heure (en fait 35 à 45 minutes à la température maximale) à 60 ou 70°C, il y a réduction de 10 à 15 %. Enfin, un chauffage de une minute à 95°C réduit la réactivité (et non la concentration) du calcium soluble de 7,5 %.

Les conséquences en fromagerie des effets du chauffage sont alors les suivantes, essentiellement au niveau des effets sur les opérations technologiques :

- le complexe forme entre la β-lactoglobuline et la caséine k s'oppose par encombrement stérique à l'action de la chymosine ;

- la diminution de la concentration en calcium soluble rend plus difficile la création des liaisons entre micelles lors de la formation et du durcissement du gel.

Du point de vue technologique, ces deux mécanismes ont des effets qui vont dans le même sens, tant au niveau des temps de prise (temps pour obtenir un début de formation de réseau à la coagulation) qu'au niveau des temps de durcissement (temps pour avoir une fermeté prédéterminée du gel) : ces temps sont, il convient de le rappeler, deux indicateurs indépendants très fréquemment utilisés dans ce domaine.

L'augmentation du temps de prise a été quantifiée par différents auteurs. Selon certains, le temps de prise est peu modifié par la pasteurisation : il faut 5 heures à 60°C ou 30 minutes à 70°C pour observer une modification, et 1 5 minutes à 80°C pour observer une augmentation de 20 %. Selon d'autres auteurs, un traitement de 20 secondes à 73°C multiplie le temps de prise par 1,2 par rapport au lait cru, et un traitement de 20 secondes à 90°C multiplie ce temps par 1,6, alors qu'un chauffage par friction à 140°C le multiplie par 4. Selon d'autres auteurs, le temps de prise à 35°C n'est pas modifié par une pasteurisation à 72°C pendant 15 secondes, mais est multiplié par 1,3 après 15 secondes à 92°C, par 2,4 après un traitement UHT direct, et par 4,6 après un traitement UHT indirect.

Ainsi, même si les chiffres varient selon les auteurs, la conclusion unanime est que le temps de prise augmente très sensiblement avec la température du traitement thermique utilisé, ce qui pour le spécialiste représente un préjugé important à choisir des traitements plus poussés, en raison du risque d'altération des qualités de fromageabilité du lait.

Pour ce qui est des temps de durcissement, on a constaté que le temps nécessaire pour obtenir une même fermeté de référence du coagulum ne varie pas après 15 secondes à 72°C, mais est multiplié par 10 après 15 secondes à 92°C, par 17 après un traitement UHT direct, et par 22 après un traitement UHT indirect.

Finalement, une augmentation de la température du traitement thermique signifie a priori pour les spécialistes que les temps de prise et de durcissement vont augmenter très vite, et parfois dans des proportions totalement incompatibles avec une exploitation fiable à l'échelon industriel. Les spécialistes ont constaté en outre que de telles conditions provoquaient une diminution de la rigidité finale du coagulum, ainsi qu'une diminution de l'égouttage de ce coagulum.

L'invention a pour objet de réaliser un procédé de traitement du lait pour la fabrication de fromages affinés, qui permette une destruction satisfaisante des bactéries contenues dans le lait, sans pour autant altérer les qualités physico-chimiques du lait déterminant son aptitude à une bonne fromageabilité.

L'invention a également pour objet de réaliser un procédé qui soit compatible avec les processus de fabrication classiques des fromages affinés, qu'ils soient à pâte pressée (cuite ou non) ou à pâte molle, autorisant des temps de prise et de durcissement aussi faibles que possible, et sans risque d'élimination insuffisante des bactéries pathogènes (listeria notamment) pour les pâtes molles.

Un autre objet de l'invention est que le procédé de traitement reste satisfaisant au niveau du rendement de fabrication en fromagerie.

Il s'agit plus particulièrement d'un procédé de traitement du lait pour la fabrication de fromages affinés, caractérisé par le fait qu'il comporte les étapes successives suivantes :

a) on soumet le lait à un préchauffage, afin de le porter à une première température, dont la valeur maximale est d'environ 50°C ;

b) on injecte directement dans le lait préchauffé de la vapeur d'eau à haute température, c'est-à-dire une température sensiblement comprise entre 170 et 190°C, et haute pression, c'est-à-dire une pression sensiblement comprise entre 7 000 et 15 000 HPa, afin de soumettre le lait, pendant un temps très bref, c'est-à-dire inférieur à une seconde, à un traitement thermique à une deuxième température nettement plus élevée, dont la valeur est sensiblement comprise entre 80°C et 160°C ;

c) on soumet le mélange de lait et d'eau à une détente, pour éliminer l'eau sous forme de vapeur, et récupérer le lait ainsi traité à une température voisine de sa température de préchauffage ;

     d) on utilise le lait traité dans un processus connu en soi de fabrication de fromages affinés à pâte pressée ou à pâte molle.

Selon un mode de réalisation particulier de l'invention, au cours de l'étape b) la deuxième température est de préférence comprise entre 90°C et 140°C.

De préférence, la durée du traitement thermique de l'étape b) est inférieure à 0,5 seconde, et avantageusement fixée à 0,4 seconde.

De préférence également, au cours de l'étape c), la détente du mélange de lait et d'eau s'effectue sous une pression de vide de l'ordre de - 950 HPa à - 900 HPa.

Avantageusement, le préchauffage effectué lors de l'étape a) se fait par échange indirect, et de préférence dans un échangeur à plaques ; en particulier, le lait préchauffé passe dans une pompe volumétrique avant l'étape d'injection de vapeur.

L'invention concerne également une installation de traitement pour la mise en oeuvre du procédé tel que défini ci-dessus.

Il s'agit plus particulièrement d'une installation de traitement, caractérisée par le fait qu'elle comporte :
- des moyens de préchauffage du lait, de préférence par échange indirect ;
- un injecteur recevant d'une part le lait préchauffé et d'autre part de la vapeur d'eau à haute température et haute pression, et en aval duquel sort le mélange de lait et d'eau ;
- un caisson de détente associé à un condenseur et une pompe à vide, permettant d'éliminer l'eau sous forme de vapeur, et de recueillir le lait traité à une température de sortie voisine de la température de préchauffage.

De préférence, les moyens de préchauffage comportent un échangeur à plaques, en aval duquel est de préférence prévue une pompe volumétrique.

Il est avantageux de prévoir que l'installation comporte une unité de production de vapeur montée en amont de l'injecteur, avec chaudière haute pression, filtre, et vanne de régulation du débit.

De préférence, l'installation comporte, en aval du caisson de détente, des moyens de refroidissement du lait stérilisé, de préférence par échange indirect grâce a un échangeur à plaques ; en particulier, l'installation peut en outre comporter un homogénéisateur, disposé en aval du caisson de détente et en amont des moyens de refroidissement.

D'autres caractéristiques et avantages de l'invention apparaîtront plus clairement à la lumière de la description qui va suivre et du dessin annexé, illustrant un mode de réalisation particulier de l'installation de traitement conforme à l'invention, installation spécialement prévue pour mettre en oeuvre le procédé de l'invention, en référence aux figures ou :

     - la figure 1 est une vue schématique de l'installation de traitement,

     - la figure 2 est une vue en coupe de l'injecteur utilisé dans l'installation de la figure 1.

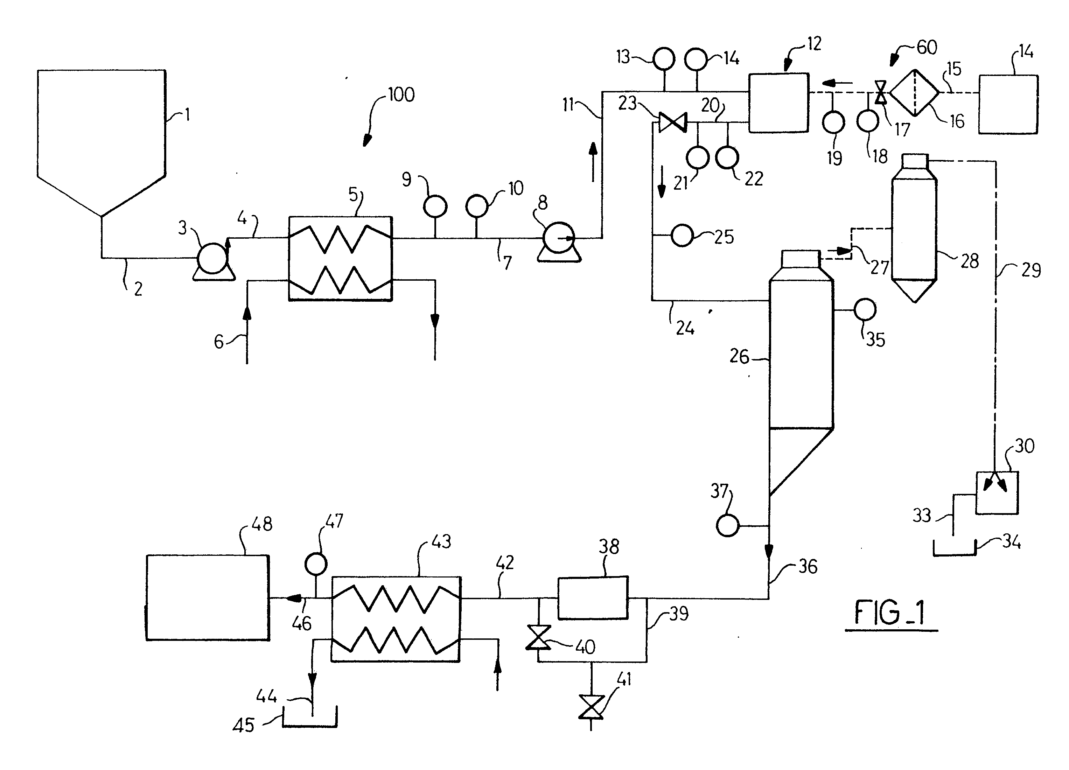

On distingue sur la figure 1 une installation 100 conforme à l'invention. Cette installation comporte d'abord un bac de lancement 1, qui est en fait une cuve recevant le lait cru à traiter. Il convient de noter que, grâce au procédé de l'invention, ce lait n'a pas besoin d'être préalablement écrémé. Le lait sort par une canalisation 2, à une température d'environ 6°C, en étant propulsé grâce à l'action d'une pompe centrifuge 3 de conception classique.

Le lait sortant de la pompe par une canalisation 4 subit alors une phase de préchauffage, pour être porté à une première température, dont la valeur maximale est d'environ 50°C pour ne pas altérer les caractéristiques physico-chimiques du lait au regard de la fromageabilité. Ce préchauffage est de préférence réalisé par échange indirect, par exemple au moyen d'un echangeur à plaques 5 de conception classique, dont le circuit d'eau chaude 6 a été illustré schématiquement.

Le lait préchauffé sort de l'échangeur 5 par une canalisation 7, sous l'action d'une pompe volumétrique haute pression 8 de conception classique (par exemple une pompe à lobes), mais capable de développer jusqu'à 14 bars. Cette pompe haute pression permet notamment de faire varier le débit de fluide, et donc de régler le volume de lait concerné. Des capteurs 9, 10 permettent de surveiller respectivement la température du lait, qui est de préférence de l'ordre de 48°C, et la pression dans la canalisation. Le lait sort ainsi de la pompe volumétrique par une canalisation 11 reliée à un injecteur 12, en amont duquel on a prévu des capteurs 13, 14 pour surveiller la pression et la température.

L'injecteur 12 est un des éléments essentiels de l'installation, car c'est grâce à lui qui l'on peut assurer pour le lait un traitement thermique très bref et à haute température.

En effet, après la phase de préchauffage, il est prévu dans le procédé de l'invention d'injecter directement dans le lait préchauffé de la vapeur d'eau à haute température (entre 170 et 190°C) et haute pression (entre 7 000 et 15 000 HPa), afin de soumettre le lait pendant un temps très bref, c'est-à-dire inférieur à une seconde, à un traitement thermique à une deuxième température nettement plus élevée, dont la valeur est sensiblement comprise entre 80°C et 160°C.

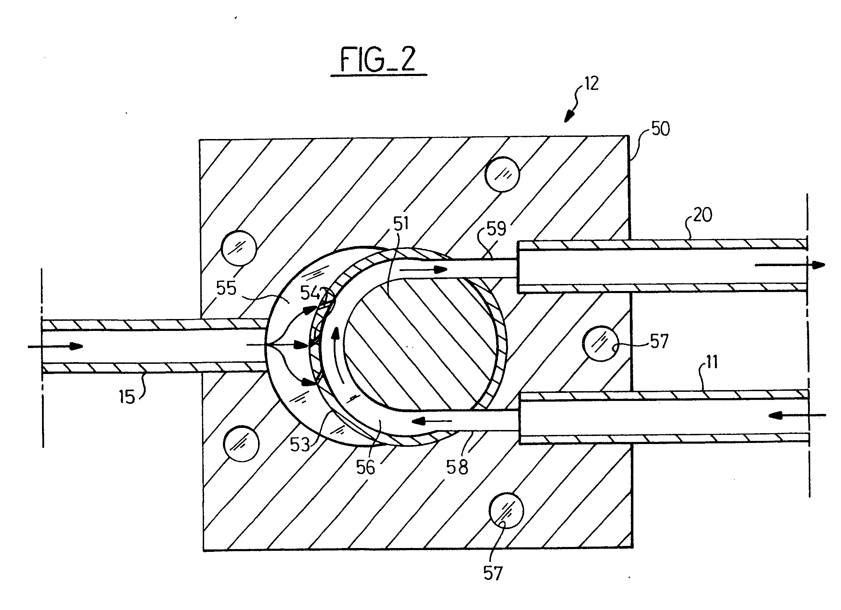

Un mode de réalisation possible de cet injecteur sera décrit plus en détail en regard de la figure 2, mais il convient d'ores et déjà de noter qu'il fonctionne de préférence conformément au procédé de dispersion décrit dans le brevet français N° 2 492 679. Selon ce procédé, pour disperser de la vapeur d'eau dans une veine fluide (le lait en l'occurrence), on donne à la veine fluide une vitesse en la faisant circuler selon une trajectoire incurvee créant dans la veine un gradient de pression, et on introduit la vapeur d'eau à disperser à travers la paroi de la veine où la pression est la plus élevée, le gradient de pression tendant à déplacer la vapeur d'eau à disperser en direction de la paroi opposée de la veine.

Il va de soi que tout autre dispositif à condensation rapide de vapeur, capable d'effectuer le traitement thermique désiré dans des conditions satisfaisantes pourra être utilisé. Cependant, avec le procédé conforme au brevet précité, la vapeur d'eau peut être très rapidement dispersée sous forme de bulles fines étant donné que les bulles les plus grosses se déplaçant plus rapidement, elles sont soumises à un effort de laminage et de striction plus élevée entraînant leur subdivision.

Un injecteur conforme à ce principe est illustré en figure 2. L'injecteur 12 représenté comporte un bloc 50 comportant un évidement central, fermé latéralement par deux flasques (non représentés) fixés par des boulons passant par des perçages 57 du bloc 50. Dans l'évidement central, on a prévu un noyau 51, dont les faces latérales sont au contact des flasques précités pour préserver l'étanchéité, et dont le contour utile présente la forme d'un demi-cercle ; on a également prévu une bague cylindrique 53 (d'axe perpendiculaire au plan de la figure), entourant le noyau 51. Cette bague comporte d'une part des orifices inclinés 54 pour l'injection de la vapeur d'eau arrivant par une canalisation 15, et d'autre part deux ouvertures communiquant avec des passages 58, 59, qui correspondent respectivement aux canalisations d'entrée 11 de lait préchauffé, et 20 de sortie de mélange de lait et d'eau.

Ainsi, la vapeur d'eau à haute pression et haute température pénètre dans une chambre 55 bordant extérieurement la bague 53, puis passe dans les orifices inclinés 54 pour pénétrer dans une veine circulaire 56 dans laquelle passe le lait, ce qui permet un échange thermique extrêmement rapide (inférieur à une seconde, et de préférence de l'ordre de 0,4 seconde). Les microbulles de vapeur d'eau se mélangent ainsi au lait de façon très homogène, puis toutes ces bulles se condensent très rapidement (la condensation est en fait presque instantanée), de sorte qu'à la sortie de l'injecteur 12, l'on recueille véritablement un mélange lait-eau par la canalisation de sortie 20.

Si l'on revient maintenant à la figure 1, on distingue une unité de production de vapeur 60, comportant. étagés le long de la canalisation 15, une chaudière haute-pression 14, un filtre 16 assurant la propreté de la vapeur (vapeur dite alimentaire), une vanne pneumatique 17, et enfin des capteurs 18, 19 permettant de contrôler respectivement la température et la pression de la vapeur arrivant dans l'injecteur 12.

Pour plus de commodité, on fonctionne avec une vapeur d'eau dont la température est fixée au départ, par exemple 160°C, et dont la pression est choisie en fonction du niveau de traitement thermique désiré. Dans la pratique, il est aisé de moduler la pression de vapeur en jouant sur la vanne 17 qui fait fonction de régulateur de débit. A titre indicatif, la fourchette de températures d'un traitement thermique conforme a l'invention allant de 80°C à 160°C, on choisira de préférence une pression s'échelonnant respectivement d'environ 7 000 HPa à environ 14 000 HPa.

Les moyens qui viennent d'être décrits permettent ainsi de réaliser la deuxième étape fondamentale du procédé de l'invention (après l'étape de préchauffage), au cours de laquelle on injecte directement dans le lait préchauffé de la vapeur d'eau à haute température (entre 1 70 et 190°C) et haute pression (entre 7 000 et 15 000 HPa), afin de soumettre le lait, pendant un temps très bref, c'est-à-dire inférieur à une seconde, à un traitement thermique à une température nettement plus élevée, sensiblement comprise entre 80°C et 160°C.

Des essais effectués ont montré que l'on obtenait de bons résultats avec une durée du traitement thermique inférieure à 0,5 seconde, et en particulier de l'ordre de 0,4 seconde.

Le mélange lait-eau sort de l'injecteur 12 par une canalisation 20 menant à une vanne de réglage 23, des capteurs 21, 22 étant en outre prévus pour surveiller respectivement la pression et la température dans la canalisation. Cette canalisation sert ainsi de chambrage à haute température pour le mélange, et la vanne 23, qui est une vanne de contre-pression, permet de faire varier le débit, et ainsi indirectement la température du mélange : en effet, si le débit diminue dans la canalisation 20, cette diminution concerne en fait le débit de lait car le débit de vapeur reste essentiellement constant, ce qui a pour effet d'élever la température du mélange lait-eau, et inversement une augmentation du débit dans ladite canalisation permet d'abaisser la température du mélange lait-eau. Il va de soi que l'on pourra utiliser des régulateurs pour le pilotage de cette vanne, dont l'équilibrage manuel peut s'avérer relativement délicat.

Le mélange lait-eau sort alors par une canalisation 24 menant à un étage de détente, un capteur 25 étant prévu pour surveiller la température dudit mélange.

L'étage de détente comporte un caisson de détente 26, comportant en partie supérieure une conduite 27 menant à un condenseur 28 relié, par une conduite 29, à une pompe à vide 30. Ces organes permettent ainsi d'éliminer l'eau sous forme de vapeur, et de recueillir en partie inférieure du caisson le lait traité qui est ainsi débarassé des micro-organismes qu'il contenait au départ. La vapeur d'eau condensée sort ainsi par la conduite 29, passe dans la pompe à vide 30, et sort enfin par une canalisation 33 vers un bac 34 associé à la pompe à vide 30 pour la récupération de l'eau.

Le débit de la pompe à vide 30 est un paramètre important, car en réglant ce débit, on peut faire varier la température de sortie et la concentration du lait.

En effet, on cherche dans la mesure du possible à retrouver un lait traité aussi proche que possible du lait de départ pour la concentration : il faut alors éviter de trop concentrer le lait, mais surtout éviter de trop le mouiller (l'excès d'eau doit rester inférieur à un pourcentage en volume de l'ordre de 1 à 2 Ceci implique de pouvoir récupérer le lait à une température de sortie aussi proche que possible de la température de préchauffage (à 1 ou 2 degrés près).

Le réglage du débit de la pompe à vide permet ainsi d'obtenir la concentration de lait désirée : par exemple, en augmentant le vide, on augmente le volume d'eau évacué, ce qui abaisse la température de sortie du lait traité et augmente sa concentration (et inversement, pour une diminution de la pression de vide).

Un capteur 35 permet de surveiller la pression dans le caisson de détente 26, et un capteur 37 permet de surveiller la température du lait ainsi traité, qui sort par une canalisation 36 montée en partie inférieure dudit caisson de détente.

La pression de vide est, ainsi qu'on vient de le voir, déterminée en fonction des températures de sortie et de préchauffage concernées. Pour une température de préchauffage de l'ordre de 48°C, une pression de vide (négative) de 900 à 950 HPa convient en général tout à fait.

Les moyens qui viennent d'être décrits permettent ainsi de réaliser la troisième étape fondamentale du procédé de l'invention (après les étapes de préchauffage, et de traitement thermique par injection de vapeur), au cours de laquelle on soumet le mélange de lait et d'eau à une détente, pour éliminer l'eau sous forme de vapeur, et récupérer le lait ainsi traité à une température voisine de sa température de préchauffage.

La dernière étape du procédé de l'invention prévoit que l'on utilise le lait ainsi traité dans un processus connu en soi de fabrication de fromages affinés (à pâte pressée ou molle). Un tel processus comporte habituellement (pour une pâte pressée telle que l'emmenthal) les étapes suivantes : ensemencement avec bactéries lactiques, maturation chaude (32°C pendant vingt minutes à une heure) ou froide (4 à 12°C pendant six à vingt-quatre heures), emprésurage, caillage, décaillage, chauffage (environ 52°C pendant 25 à 45 minutes), brassage, soutirage, moulage, pressage (trois à vingt-quatre heures), saumurage (24 à 48 heures), essuyage, et enfin affinage (45 à 60 jours sous 17 à 20°C). Pour les pâtes molles, les étapes sont légèrement modifiées (notamment avec des étapes de tranchage et d'égouttage en moule), et les conditions opératoires (températures, durées) parfois légèrement différentes (l'affinage ne dure par exemple qu'une dizaine de jours).

Les indications qui précèdent sont donnees à titre purement illustratif, et il va de soi que les étapes du processus de fabrication pourront varier selon le type de fromage affiné concerné.

La figure 1 illustre une installation ici équipée d'un étage de refroidissement, lequel est naturellement tout à fait facultatif et dépend de la technologie concernée.

On peut ainsi prévoir des moyens de refroidissement, fonctionnant de préférence selon un échange indirect, par exemple un échangeur à plaques 43, pour lequel on a illustré schématiquement le circuit d'eau froide 44 et le bac d'évacuation ou de récupération 45.

Le lait sortant de l'echangeur par une canalisation 46 est ainsi envoyé à une température convenable (6°C environ) vers une unité de conditionnement 48, la température du lait étant contrôlée par un capteur 47 monté sur ladite canalisation.

Il est également possible de prévoir un homogénéisateur 38 de type connu (comportant un ajutage suffisamment petit pour diminuer la taille des globules gras, afin d'éviter leur remontée ultérieure à la surface du lait), avec une canalisation 39 et des vannes 40, 41 associées.

La demanderesse a effectué des essais comparatifs montrant que le lait ainsi traité conservait toutes ses qualités de fromageabilité, en plus d'une destruction très satisfaisante des germes (notamment pour les bactéries pathogènes telles que les formes de listeria).

L'invention présente, par les résultats qu'elle permet d'obtenir, un caractère tout à fait surprenant pour les spécialistes de la fromagerie.

En effet, les temps de prise et de durcissement ne sont pas aussi élevés que l'on pouvait s'y attendre avec des traitements thermiques montant aussi haut en température, et qui plus est ces temps sont très proches de ceux que l'on avait avec un lait pasteurisé faiblement traité thermiquement (par exemple un traitement à 74°C pendant 15 secondes, classique pour les fromages à pâte molle). On constate ainsi que les qualités physico-chimiques du lait, et en particulier son aptitude à la coagulation (fermeté du gel à la coagulation), n'ont nullement été altérées par le traitement thermique, ce qui résulte vraisemblablement de la très faible durée du traitement thermique.

A titre indicatif, on va donner ci-après les résultats d'essais comparatifs qui ont été effectués.

On a tout d'abord mené des tests de fromagerie classiques dans le domaine des fromages affinés à pâte molle, avec, d'une part, un lait traité conformément à l'invention (le traitement thermique concerné était de 90° pendant 0,4 seconde), et un lait classique pasteurisé faiblement traité thermiquement (74°C pendant 15 secondes).

Un test de coagulation classique en bécher (avec acidification par acide citrique, abaissement du pH à 6,15 pour permettre l'action de la présure, chauffage à 36°C, et emprésurage) a montré que les temps de prise étaient pratiquement les mêmes (5 minutes 12 secondes avec un lait traité selon l'invention, et 5 minutes 4 secondes avec un lait pasteurisé), et a montré des variations comparables pour le volume de sérum exsudé en fonction du temps de moulage.

Un test en bassine a également montré qu'il y avait très peu de différences dans les variations de l'acidification en fonction du temps (l'acidification est un paramètre important pour la fromageabilité, et on procède par ajout de ferments mésophiles), dans la fermeté du caillé, et dans les temps de prise et de durcissement (respectivement 4 minutes 1 2 secondes et 12 minutes 30 secondes pour un lait pasteurisé classique d'une part, 4 minutes 5 secondes et 13 minutes pour un lait traité selon l'invention d'autre part).

On a également testé en mini-fabrication l'aptitude des deux types de lait à une fabrication de fromage affiné du type à pâte pressée, en comparant les temps de prise, de durcissement et de moulage :
- Temps de prise en portant des échantillons de 100 ml à 35°C au bain-marie, puis en procédant à un emprésurage de 45 ml/100 l en présure diluée 1 : 10 000, on a constaté que le temps de prise était de l'ordre de 12 minutes 27 secondes avec un lait pasteurisé traditionnel, et de 11 minutes 50 secondes avec un lait traité selon l'invention : les temps de prise ne présentent donc pas de différences significatives, contrairement à ce que l'on aurait pu penser en s'appuyant sur les études citées plus haut.

- Temps de durcissement : en comparant des échantillons d'un litre et demi de lait (à 35°C, avec 8 unités/100 l de ferments lyophilisés, 45 minutes de maturation en cuve, et 30 ml/100 l d'emprésurage avec une présure à 1 : 10 000), on a constaté que le temps de durcissement était de 22 minutes avec un lait pasteurisé traditionnel, et seulement de 23 minutes avec un lait traité selon l'invention : ces résultats sont encore plus surprenants que les précédents, si l'on se réfère aux études citées plus haut mentionnant un temps dix fois plus grand si on augmentait la température de 20°C dans un traitement thermique de 15 secondes.

- Temps de moulage : pas de différences significatives entre les deux sortes de lait, le lait traité selon l'invention présentant un bon état de reprise après le brassage.

Par ailleurs, ainsi que cela était prévisible, le lait traité selon l'invention est très supérieur au lait pasteurisé traditionnel pour ce qui est de la destruction des germes.

Pour les germes totaux, si l'on a un échantillon comportant 11 120 000 germes (lait de départ), il en reste environ 80 400 dans un lait pasteurisé traditionnel, et seulement 1 300 dans un lait traité selon l'invention. En particulier, pour les bactéries thermorésistantes, on passe respectivement de 240 000 à 3 000 ou à 300 selon le traitement effectué, et, pour les bactéries psychrotrophes, de plus de 10 000 000 à 68 800 ou 90 selon le cas.

Finalement, le lait traité selon le procédé de l'invention conserve toutes ses qualités de fromageabilité, avec en plus une destruction très supérieure des germes.

Si maintenant on envisage des gammes de températures plus élevées pour le traitement thermique effectué dans le cadre de l'invention, on constate que les propriétés de fromageabilité sont un peu altérées, notamment quand on atteint 160°C, mais ces propriétés restent encore tout à fait admissibles, alors que des traitements thermiques classiques poussés, du type UHT direct (traitement de 140° pendant 30 secondes) ne conviennent plus.

Un bon indicateur de l'altération du lait par les traitements thermiques consiste à examiner l'évolution du taux de protéines solubles (pourcentage des protéines solubles par rapport à la matière azotée totale).

On a constaté une baisse de 7 % par rapport au lait de départ, aussi bien avec un lait pasteurisé classique (traitement de 74°C pendant 1 5 secondes) qu'avec un lait traité selon l'invention, mais en gamme basse de température (traitement de 90°C pendant 0,4 seconde). Cette faible dénaturation des protéines n'altère pas la fromageabilité du lait.

Par contre, la situation diffère notablement lorsque l'on procède à des traitements thermiques poussés. On a en effet constaté, par rapport au lait de départ, une baisse de 19 % avec un lait UHT classique, et une baisse de 13,5 seulement avec un lait traité selon l'invention, mais en gamme haute de température (traitement de 160°C pendant 0,4 seconde) : la dénaturation thermique est donc nettement plus faible avec un lait traité selon l'invention. Il convient de noter que la dénaturation des protéines indiquée ci-dessus pour un lait UHT classique a pour conséquence que ce lait n'est pratiquement plus fromageable.

D'une façon générale, ces essais montrent que la fromageabilité reste acceptable avec un lait traité selon l'invention, les différences vis-a-vis des techniques classiques étant en outre d'autant plus sensibles que la température du traitement thermique est élevée.

Pour mémoire, en ce qui concerne la destruction des germes, on ne retrouve plus de germes tant pour un lait UHT que pour un lait traité selon l'invention, mais en gamme haute de température (160°C), ce qui était prévisible avec les températures concernées. Les tests comparatifs ne présentent dans ce cas aucun intérêt, contrairement à l'exemple précédent où l'on a comparé un lait pasteurisé classique à un lait traité selon l'invention, mais en gamme basse de température (90°C).

Il va de soi que l'invention n'est nullement limitée aux modes de réalisation qui viennent d'être décrits, tant en ce qui concerne le procédé de traitement que pour l'installation de traitement prévue pour la mise en oeuvre dudit procédé, mais englobe au contraire toute variante reprenant, avec des moyens équivalents, les caractéristiques figurant aux revendications.

## Revendications

1. Procédé de traitement du lait pour la fabrication de fromages affinés, caractérisé par le fait qu'il comporte les étapes successives suivantes :

    a) on soumet le lait à un préchauffage, afin de le porter à une première température, dont la valeur maximale est d'environ 50°C ;

    b) on injecte directement dans le lait préchauffé de la vapeur d'eau à haute température, c'est-à-dire une température sensiblement comprise entre 170 et 190°C, et haute pression, c'est-à-dire une pression sensiblement comprise entre 7 000 et 15 000 HPa, afin de soumettre le lait, pendant un temps très bref, c'est-à-dire inférieur à une seconde, à un traitement thermique à une deuxième température nettement plus élevée, dont la valeur est sensiblement comprise entre 80°C et 160°C ;

    c) on soumet le mélange de lait et d'eau à une détente, pour éliminer l'eau sous forme de vapeur, et récupérer le lait ainsi traité à une température voisine de sa température de préchauffage ;

    d) on utilise le lait traité dans un processus connu en soi de fabrication de fromages affinés à pâte pressée ou à pâte molle.

2. Procédé selon la revendication 1, caractérisé par le fait qu'au cours de l'étape b) la deuxième température est de préférence comprise entre 90°C et 140°C.

3. Procédé selon l'une des revendications 1 et 2, caractérisé par le fait que la durée du traitement thermique de l'étape b) est inférieure à 0,5 seconde, et de préférence fixée à 0,4 seconde.

4. Procédé selon l'une des revendications 1 à 3, caractérisé par le fait qu'au cours de l'étape c), la détente du mélange de lait et d'eau s'effectue sous une pression de vide de l'ordre de - 950 HPa à - 900 HPa.

5. Procédé selon l'une des revendications 1 à 4, caractérisé par le fait que le préchauffage effectué lors de l'étape a) se fait par échange indirect, et de préférence dans un échangeur à plaques.

6. Procédé selon la revendication 5, caractérisé par le fait que le lait préchauffé passe dans une pompe volumétrique avant l'étape d'injection de vapeur.

7. Installation de traitement pour la mise en oeuvre du procédé selon l'une des revendications 1 à 6, caractérisée par le fait qu'elle comporte :
- des moyens de préchauffage du lait (5, 6), de préférence par échange indirect ;
- un injecteur (12) recevant d'une part le lait préchauffé et d'autre part de la vapeur d'eau à haute température et haute pression, et en aval duquel sort le mélange de lait et d'eau ;
- un caisson de détente (26) associé à un condenseur (28) et une pompe à vide (30), permettant d'éliminer l'eau sous forme de vapeur, et de recueillir le lait traité à une température de sortie voisine de la température de préchauffage.

8. Installation de traitement selon la revendication 7, caractérisée par le fait que les moyens de préchauffage comportent un échangeur à plaques (5), en aval duquel est de préférence prévue une pompe volumétrique (8).

9. Installation de traitement selon l'une des revendications 7 et 8, caractérisée par le fait qu'elle comporte une unité de production de vapeur (60) montée en amont de l'injecteur (12), avec chaudière haute pression (14), filtre (16), et vanne de régulation du débit (17).

10. Installation de traitement selon l'une des revendications 7 à 9, caractérisée par le fait qu'elle comporte, en aval du caisson de détente (26), des moyens de refroidissement (43, 44) du lait stérilisé, de préférence par échange indirect grâce à un échangeur à plaques (43).

11. Installation de traitement selon la revendication 10, caractérisée par le fait qu'elle comporte un homogénéisateur (38), disposé en aval du caisson de détente (26) et en amont des moyens de refroidissement (43, 44).

FIG_1

# FIG_2

EP 0 327 453 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | WO-A-8 402 062  (INSTITUT DE LA RECHERCHE AGRONOMIQUE) <br> * Revendications 1,6; page 16, ligne 12 - page 17, ligne 15 * & FR-A-2 536 520 (Cat. D) | 1,3,4,5 | A 23 C   3/037 <br> A 23 C  19/05 |
| X | --- | 7,11 | |
| D,Y | DE-A-2 232 217  (ALFA-LAVAL) <br> * Revendication 1; exemple 3; page 7, lignes 16-23 * | 1,3,4,5 | |
| X | --- <br> SULZER TECHNICAL REVIEW, vol. 46, no. 2, 1964, pages 93-97; W. REGEZ: "Uperisation as it stands today" <br> * Page 94 * | 7,8,10, 11 | |
| A | IDEM <br> --- | 1,4,5,6 | |
| X | US-A-2 846 320  (W. WITTWER) <br> * Revendication 1; colonne 2, lignes 12-71; colonne 3, ligne 62 - colonne 4, ligne 11 * | 7,8,10 | |
| A | --- | 1,3,4,5 | DOMAINES TECHNIQUES RECHERCHES (Int. Cl.4) <br><br> A 23 C |
| A | JOURNAL OF DAIRY SCIENCE, vol. 63, no. 11, novembre 1980, pages 1802-1808; K.R. SWARTZEL et al.: "Fail-safe requirements for holding tube pressure in an ultra-high-temperature steam injection system" <br> * Page 1802, colonne 2 - page 1803, colonne 2 * <br> ---       -/- | 1,2,3 | |

Le présent rapport a été établi pour toutes les revendications

| Lieu de la recherche | Date d'achèvement de la recherche | Examinateur |
|---|---|---|
| LA HAYE | 10-05-1989 | DESMEDT G.R.A. |

Office européen
des brevets

**RAPPORT DE RECHERCHE EUROPEENNE**

Numero de la demande

EP  89 40 0280

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | JOURNAL OF DAIRY SCIENCE, vol. 53, no. 10, 1970, pages 1353-1357; E.R. EDGERTON et al.: "Effect of process variables on the holding time in an ultrahigh-temperature steam injection system"<br>* Page 1354, figure 1 *<br>--- | 10 | |
| A | US-A-4 344 970  (R. ZALL)<br>* Colonne 3, lignes 34-49 *<br>--- | 1 | |
| A | US-A-3 297 451  (I. EGGEN)<br>* Revendication 1 *<br>----- | 1 | |

DOMAINES TECHNIQUES RECHERCHES (Int. Cl.4)

Le présent rapport a été établi pour toutes les revendications

| Lieu de la recherche | Date d'achèvement de la recherche | Examinateur |
|---|---|---|
| LA HAYE | 10-05-1989 | DESMEDT G.R.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)